# EUROPEAN PATENT APPLICATION

(11) **EP 3 933 179 A1**
(43) Date of publication of application: **05.01.2022**
(21) Application number: 20185807.3
(22) Date of filing: 14.07.2020
(51) Int. Cl.: F01N 3/28, F01N 3/021, B01F 5/00

(54) **AIR DIFFUSER**

(30) Priority: 01.07.2020 BR 202020013548 U
(71) Applicant: Nelymeire de Paula - ME, 82820-050 Curitiba- PR (BR)
(72) Inventor: MARCHIORATO, Jan Adonis, 82820-050 Curitiba- PR (BR)
(74) Representative: Lorente Berges, Ana

(57) **Abstract**

The present patent of a utility model belongs to the field of accessories and equipment destined to the automotive market and/or other equipment that require combustive engines, and more particularly it refers to a metallic device that conducts the whirling air to a vortex, Fibonacci's physical law, in addition to regulating the molecules energetically, resulting in higher pressure and lower flow of air intake into the engine, the present solution is extremely important for the engine market, because with this solution, it is possible to improve the fuel burning, reduce the pollutant gases eliminated through the vehicle/machine exhaust pipe, reduce the consumption of fuel, increase the service life of the engine (cooling), regulate the air molecules, increase the engine power by the positive air and make a fixed barrier of the air reducing reflux.

## Description

### TECHNICAL FIELD OF THE INVENTION

The present patent of a utility model belongs to the field of accessories and equipment destined to the automotive market and/or other equipment that require combustive engines, and more particularly it refers to a metallic device that conducts the whirling air to a vortex, Fibonacci's physical law, in addition to regulating the molecules energetically, resulting in higher pressure and lower flow of air intake into the engine.

The present solution is extremely important for the engine market, because with this solution, it is possible to improve the fuel burning, reduce the pollutant gases eliminated through the vehicle/machine exhaust pipe, reduce the consumption of fuel, increase the service life of the engine (cooling), regulate the air molecules, increase the engine power by the positive air and make a fixed barrier of the air reducing reflux.

Therefore, in the patent application in question, there is a device especially designed and developed perfectly and efficiently with the purpose to offer practicality and economy to its users and bring big advantages for the environment, considering reduction in the emission of gases released by the vehicle and/or machine exhaust pipes.

Furthermore, the purpose of the present application is to present an accessory that meets all requirements for robustness, safety and utility practicality; thus, offering to the consuming population an additional option in the market of similar products, which, in relation to the products in the current market, offers numberless possibilities and benefits to its users, becoming a model, which is highly accepted in the industry market.

### HISTORY OF THE INVENTION

The heart of an automobile is its engine.Since the first self-propelled vehicle, that is, vehicle able to move alone by means of power generated by components fixed to its structure, the internal combustion propulsion engine has been improved.Many of the solutions we believe are modern are surprisingly almost as old as the engine itself.

The current engined for automobile deployment have been under development for more than 100 years.Most technological innovations, thermodynamic studies and improvement of the global efficiency of the internal combustion engines have been made along the history of the motor road transport.

In 1854, the first project of an internal combustion engine was patented by the engineers Eugenio Bersanti and Felice Matteucci in Italy.The project consisted in using gas expansion energy released by the combustion of an explosive mixture of air and hydrogen to move a piston and transform this linear motion into rotational motion using a crankshaft.This engine has never been manufactured in mass. In 1860, the Belgian Jean Joseph Etienne Lenoir used Barsanti's and Matteucci's concept to create a two-stroke engine using explosive gas, by means of an spark plug to start the burning.

In 1863, Lenoir created a three-wheel motor carriage called Hippomobile, equipped with the engine he designed, of 2,543 cm3 engine displacement, which burned petroleum and made a test trip from Paris to the city of Joinville Le Pont.Along his life, Lenoir sold approximately 350 Hippomobiles.ln 1870, Siegfried Samuel Marcus, installed a combustion engine in a handcart baptized Marcus I for transport of small goods with the differential that that would be the first use of petroleum derivatives as fuel.After some years working on low voltage ignition system techniques and a rotating brush carburettor system, for which he got a patent in the magneto assay in 1883, Marcus presented his second design in 1888, Marcus II.

During the years when Marcus worked on the design of Marcus II, another German, Nikolaus Otto, developed his concept of the Otto cycle, with four-stroke operation of the engine com (intake, compression, power and exhaust).Otto would create the first efficient internal combustion engine, which burnt fuel inside the cylinder, in a proper combustion chamber, in 1876 together with Gottlieb Daimler and Wilhelm Maybach.Before that, Otto had already employed Lenoir's concept in other engines.

The concept of the four-stroke engine created by Otto would be the standard for most developments to come. In 1879, Karl Benz created a two-stroke engine based on the Otto cycle, he used this concept again and created his own four-stroke engine, which was employed in the famous Benz Motorwagen from 1885, the first automobile manufactured commercially with Otto cycle engine, officially released to the population in 1886.

The credit for the creation of the combustion engine is attributed to the German engineer, physicist and inventor Nikolaus August Otto.His invention fated 1866 revolutionized the industry, which broadly used steam engine at that time.He developed the principle of operation known as Otto Cycle, which consists of thermodynamical transformations, which can be observed in the automobiles till nowadays.

Otto Cycle is composed of four parts. In the first, Intake, the so-called combustion chamber, where the process occurs, expands, causing intake of fuel and air.ln the second, the chamber is Compressed.In the third step, Power, a sparkle is released inside, generating ignition that expands the combustion chamber again.Finally, in Exhaust, the gases formed during the combustion are expelled and the air and fuel intake valves are open, restarting the process.

The whole process combined with a transmission system defines the so-called internal combustion engine.However, this so important and clever machine has already undergone several modifications since its creation, leading to the different types that currently exist.

There were many variations and modifications made in the internal combustion engine bringing advantages and disadvantages in relation to the original model.Some of these changes, broadly known nowadays, can be seen hereunder:
Diesel or gas-oil engine: one of the most famous engine models, in addition to the original, is the Diesel engine, invented by the engineer Rudolf Diesel in 1893.This machine works in a similar way to that of the Otto cycle, but the main difference is the ignition method. In this process, the intake atmospheric air does not mix with the fuel initially. It is compressed to a state of temperature, which is high enough to burn the fuel.After this step, the duel is introduced in the combustion chamber, undergoing spontaneous combustion.Thus, instead of a sparkle starting the combustion, the proper compression of the atmospheric air does so.

The Diesel engine shows some performance differences from the one created by Ofto.It does not cause almost any waste of fuel, presenting better energetic efficiency and its service life is longer. It is also a type of engine with a trend of higher torque, that is, it is stronger. However, it works only with heavier fuels and therefore, it does not apply to some engine configurations and generates more pollutants than gasoline, for example. Furthermore, its acceleration is lower.

Brayton Cycle: the engine with the principle of operation of the Brayton cycle was invented by the American engineer George Brayton.Originally, its patent was called "Ready Motor".The Brayton cycle was used as a base for the development of gas turbines, the operation of which is quite different from the 2 models of engines mentioned above.

At first, it shall be mentioned that the process stages occur at the same time and continuously, but in different locations.There are 3 cells in this type of engine, namely, the compressor, the combustion chamber and the turbine. Operation starts with the compression of the air, which is sent to the combustion chamber.Then, this air is heated by means of the fuel burning.Thus, there is expansion and the air is led to the turbine, colliding with its vanes, generating movement and being expelled.

The gas turbines are broadly used nowadays.A big example are the aircraft, where this technology is broadly employed. The costs involved in this technology are higher, but it provides high power and speed.

There are several other internal combustion engines with their associated structures and theoretical cycles, such as pulsejet, Ericsson e Stirling. They can also be categorized according to different criteria, such as the way combustion is done, the phase separation, its linking, whether it is alternative or rotational, among others.

Currently, the internal combustion engines are still broadly used with the Otto Cycle, created more than 150 years ago.In the transport sector, since automobiles to aeronautics, this technology domains the market. It shows to be irreplaceable in many sectors of industry as well.

In the future, it might be replaced with new technologies, such as electric motors, for example. However, observing the numberless deployments of the endothermic engines, it cannot be denied that they were one of the inventions that impacted society the most since the XVIII century.

### STATE OF THE ART

The development of the engine technology is focused on the improvement of the thermal efficiency of the engine and the quality of the combustion.Approximately 22% of the gasoline power transform into mechanical power and 27% for diesel.The thermal cycles of the engines are different and they operate at different compression rates, which contributes to this difference.

Recently, gasoline engines with direct injections have surged, which try to increase the compression rate and decrease the quality of the air + fuel mixture, aiming to improve performance and consumption.

For this formula to be successful, it is necessary to optimize the capacity of intake in the combustion chamber.This is managed by increasing the intake pressure by means of compressors or turbines, changing the air route in the cylinder head or creating conditions for more air to reach the cylinders, preferably at lower temperatures.This concept is well-known by the the people that prepare engines for races, but it is not used for commercial engines, because maximum performance is not the focus.

The use of compressors or turbines for the engine intake improved performance a lot. This technology, which was restricted to the diesel engine and the more expensive gasoline engine vehicles, is becoming increasingly more present because of the increase in the production scale and the optimization of the design.Smaller and smaller turbines manage to avoid problems, such as delay in relation to the throttle due to the system inertia.If on one hand this has increased pressure, this system tends to increase the air temperature because of the compression process.Even in the presence of intermediary coolers, the "intercoolers", part of performance gain is lost due to the higher air intake temperature.

In the race lanes, often the mechanics modify the gas route, changing the geometry of the cylinder head.There are categories that impede this modification to make the event more competitive.This alternative is disregarded for vehicles, which are already in use, once the cost of this solution would be prohibiting.Anyway, air intake with better pressure and lower temperature contribute to the global performance of the engine.

This air whirling effect generates improvement of performance of most engines used in Brazil.This effect is a little lower for engines with direct injections of duel, which already work with a poor fuel mixture. In this type of engine, the volume of fuel injected directed in the cylinder is lower, which may cause combustion failures.For this purpose, there is already a design that leads the air flow in an optimized way into the cylinder, assuring combustion.For injecting less fuel, this type of engine tends to be more economic that those of indirect mixture with air in the cylinder head.Nonetheless, it is possible to perceive the engine performance gain.

In the combustion area, whirling of the air + fuel mixture has enabled use of low calorific fuels,which couldn't be used in conventional burners.This better mixture makes the reaction easier, which becomes homogeneous and stable.This technology is often found in burning biomass in fluidized bed and burning poor gases coming from waste reuse processes.

Recently, a gasifier of Urban Solid Waste - USW installed in the municipality of Mafra, with capacity to process 100 tons of USW daily, managed to stabilized the burning of the produced gas only when it started using a torsional combustion chamber, with no need of pilot flame.Thus, the principle of combustion improvement by increased whirling or mixture of air with fuel tends to improve the combustion reactions, reducing the generation of carbon monoxide and some other controlled gases.

Sung et al.(2017) explained the effect of air whirling in pulverized coal burners.Although this is a technology that has been used quite a while, this study enabled testing several angles for the whirling generation device and other project parameters to measure performance.

Wang et al.(2019 A) simulated the whirling effect at the intake of the cylinder of a diesel engine, and compared to the results obtained experimentally in a single-cylinder engine.They used an injecting nozzle of 5 jets against that of a single jet, and concluded that the engine performance is better at high loads. In this work, whirling was generated by the fuel jet angle of the injecting nozzle.

Bari, Johansen and Alhers (2015) proposed a vortex generator in the air intake of an engine fed by biodiesel.Upon comparison of different technical indicators using diesel and biodiesel, with or without vortex generation, they concluded that there is better air/fuel mixture, which generates clean burning, considering that biodiesel shows problems in burning in the engine.

Wang et al.(2019 B) simulated the effect of a vortex generating baffle at the air intake of a diesel engine and concluded that there is improvement up to angle 48°, with 5.79% increase in the engine power and improvement in consumption.

Although there have been some deployments in biomass burners using the principle of airwhirling to improve the burning efficiency for a while, this topic has been studied for the development of engines recently.

In search made in some specialized databases, documents were found that aim to improve the combustion engine operation, such as document n.° PI Q70312Q-3-"MULTIPLE DIFFUSER FOR AN ALTERNATIVE PISTON COMBUSTION ENGINE AND AN ALTERNATIVE PISTON COMBUSTION ENGINE", the present invention refers to a multiple diffuser (1) for an alternative piston combustion engine, particularly a big two-stroke diesel engine, in which the multiple diffuser (1) includes a diffuser housing (4) deviating from a diffuser inlet (2) to a diffuser outlet (3) along a longitudinal axis (L), with a diffuser insert (5, 51, 52, 53) arranged inside the diffuser housing (4).The diffuser inlet (2) can be connected to an outlet (6) of an exhaust gas turbocharger (7) and the diffuser outlet (3) can be connected to a charge air cooler (8) of the alternative piston combustion engine, so that in the operational state of the alternative piston combustion engine, pure air can be introduced (9), from the exhaust gas turbocharger (7) through the multiple diffuser (1) inside the charge air cooler (8).According to the invention, the multiple diffuser (1) is done asymmetrically in relation to the longitudinal axis (L).Furthermore, the invention refers to an alternative piston combustion engine, particularly a big two-stroke diesel engine, with a multiple diffuser (1) according to the invention.

Although the document above belongs to the same market segment, it does not provide any similarity to the present solution, considering that a fan system is not used therein, consequently, it does not bring benefit to what refers to fuel economy, as well as reduction of pollutants in the environment.

### BRIEF DESCRIPTION OF THE INVENTION

Thus, upon analysis of the state of the art and aiming to present improvement in the engines, the inventor, who has notable knowledge about the industry, created and developed an air diffuser, which, when installed on the air intake line, generates whirling that improves the mixture of air and fuel, reduces the air temperature and generates positive pressure on TBI, minimizing the gas reflux.This combination of factors increases the amount of oxygen in the combustion chamber, enables reducing the quality of the air and fuel mixture, which considerably reduces the fuel consumption, improves the engine power and consumption, and also reduces the emission of carbon monoxide, increasing the service life of the engine.

The principle of using a poorer mixture of air and fuel has been adopted upon the development of the electronic injection in the direct duel injection engines.

With the present solution, the power gain will be remarkable; it may reach up to 25% and reduce build-up of residues, which increases the service life of the engine, the spark plugs and the valves, in addition to provenly reducing pollution by up to 90%.

Tests carried out on an engine, a dynamometer on bench and on the streets indicate fuel economy between 10 and 30%, depending on the brand, and consequently, power gain.

In addition to the better use of the fuel power, significant reduction of the atmospheric emissions, mainly carbon monoxide, was also verified due to the better fuel burning.As the engine is more economic, the amount of emission per kilometer also reduces, contributing to improvement of the quality of the atmospheric air.

The solution is provided with internal fans, which improve the air flow.These fans are driven by the air flow and contribute to keep positive pressure on TBI or carburetter.

Finally, it is important to point out that the solution commented herein is completely versatile, because it can be used in any light or heavy vehicles, regardless of their brand, whether moved by gasoline, ethanol, diesel of CNG.

This accessory does not consider only mechanical and functional properties, but also the shape, the arrangement and the strategic localization of its parts and components, which, placed correctly, brought increase in efficiency without any burden to their users.

It shall be comprehended that the construction of said diffuser is extremely simple, and therefore, industrial manufacturing is easy; however, excellent practical and functional results are obtained, offering a novelty construction.

### DESCRIPTION OF THE FIGURES

With the purpose to illustrate and clarify the characteristics of the present invention according to a basic and preferred embodiment elaborated by the applicant, a reference is made to the attached illustration drawings, which are part of and ground the present descriptive report, and where the following can be seen:

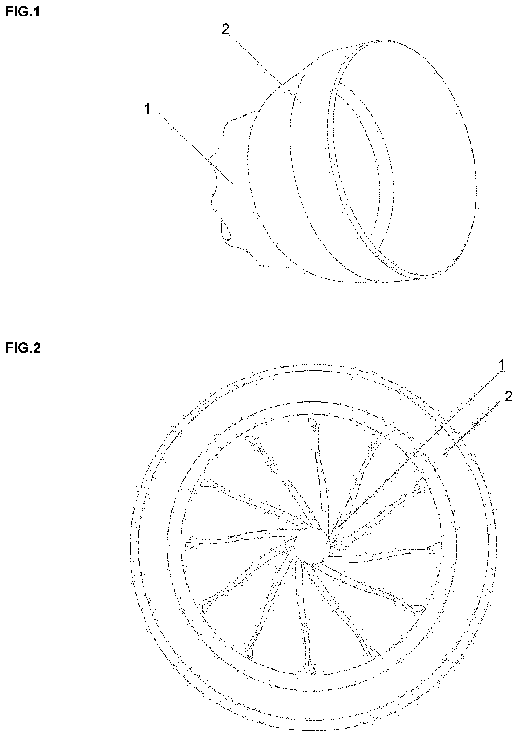

Figure 1 illustrates a view of the rear part of the diffuser;
Figure 2 shows an internal view of the front part of the diffuser, where it is possible to see the vanes;

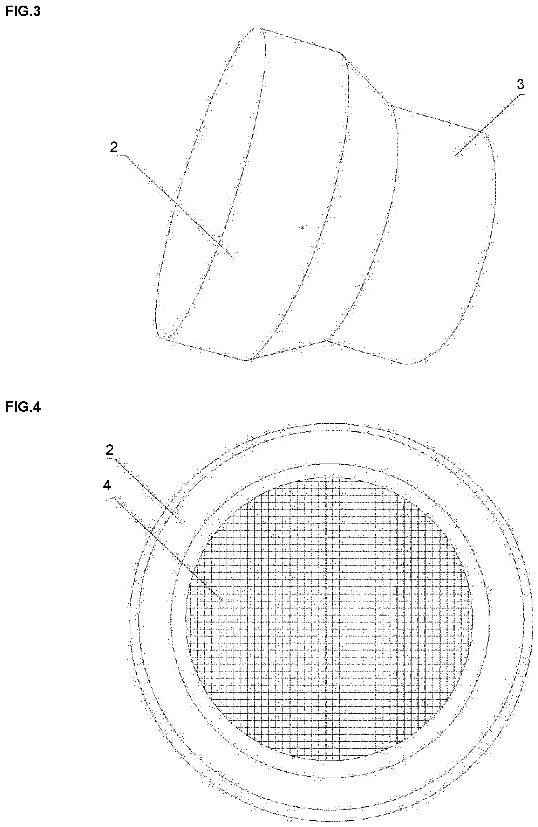

Figure 3 reveals another view of the rear part of the diffuser;
Figure 4 provides an image, where we can see one of the protection screens;

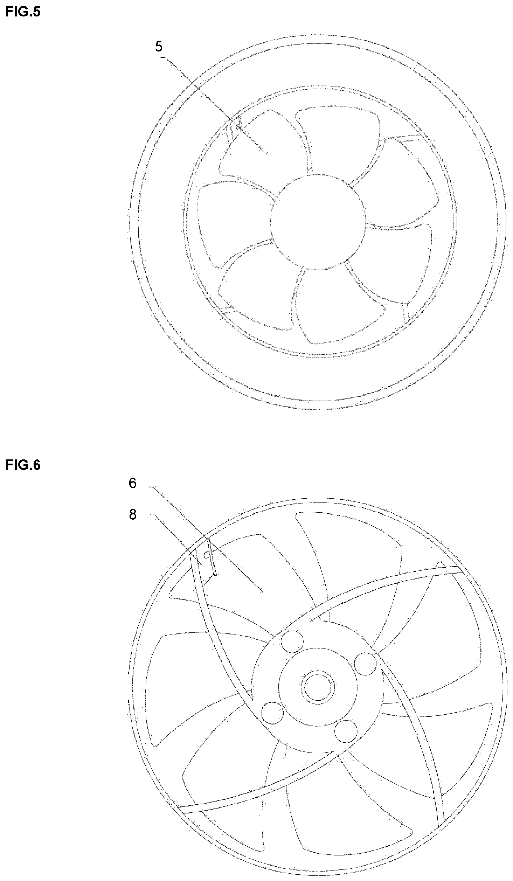

Figure 5 illustrates a view of the smaller fan;
Figure 6 illustrates a view of the bigger fan and its support;

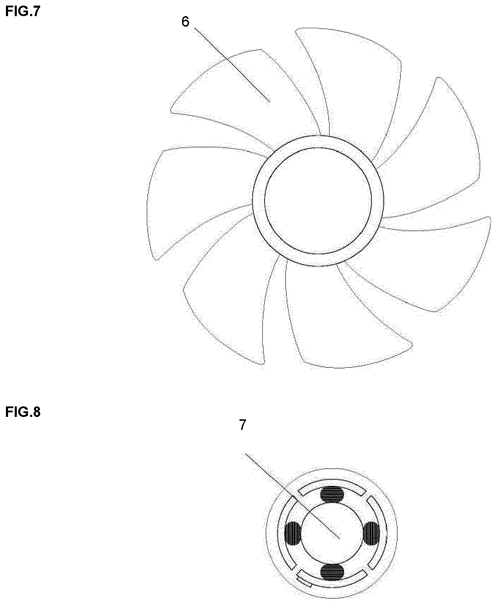

Figure 7 shows a focused view of the bigger fan;
Figure 8 shows an image of the bearings of the bigger fan;

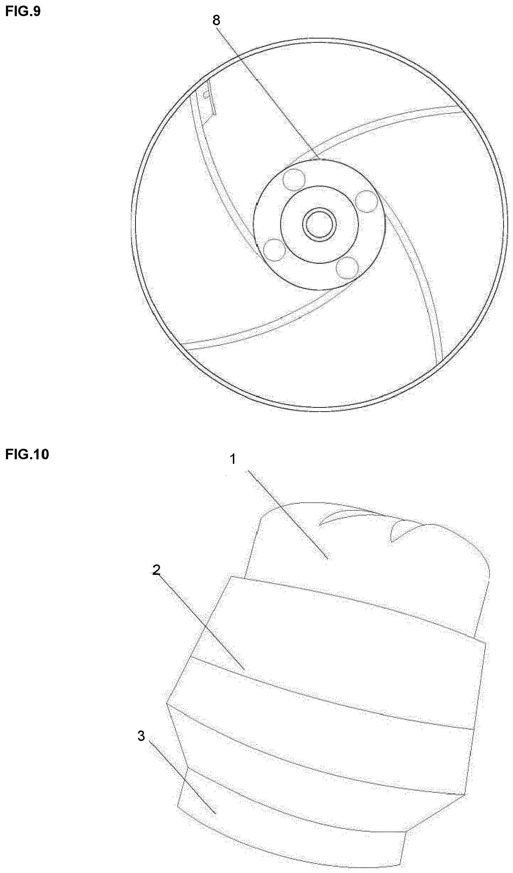

Figure 9 reveals the support of the bigger fan, and Figure 10 provides an perspective image of the complete diffuser.

### DETAILED DESCRIPTION OF THE INVENTION

As we can see on the drawings listed above, the preset device is composed of a front part with vaned diffuser (1) for distribution of air calibrated according to the engine, a rear part (3) to capture the air from the vehicle filter or the intercooler, both parts fit by means of a simple fitting system (2).

In the internal part of the device, there are two protection screens (4) made of stainless steel, on will be allocated in the diffuser, and the other one will be installed in the rear part of the device, furthermore, the equipment is provided with two magnetized enhancing propellers (5 and 6), namely, the smaller (5) and the bigger (6), in the central part of the bigger propeller (6), there are bearings (7) and a support (8).

For turbo or diesel engines, the use of propellers (5 and 6) is not necessary, considering that the air is captured by the vehicle itself.

It is certain that when the present invention is placed in practice, modifications can be made to what refers to given construction and shape details, but this will not lead to deviation from the fundamental principles clearly grounded in the claim chart; thus, it is hereby understood that the terminology used was not limiting.

Therefore, the present descriptive report is about a totally novelty concept, which presents innovative constructive and functional technical characteristics, as it can be evidenced by the analyses made and the figures shown.

Because of the advantages it offers and for presenting truly innovative characteristics that meet all requirements for novelty and originality in the area, the present **"**CONSTRUCTIVE ARRANGEMENT APPLIED IN AIR DIFFUSER FOR COMBUSTION ENGINES**",** gathers the necessary conditions to deserve a patent of utility model.

## Claims

1. **"CONSTRUCTIVE ARRANGEMENT APPLIED IN AIR DIFFUSER FOR COMBUSTION ENGINES",** composed of a front part with vaned diffuser (1), a rear part (3), both parts fit by means of a simple fitting system (2), which is **characterized by** its internal part composed two protection screens (4), one to be allocated in the diffuser and the other one to be installed in the rear part of the device, the equipment provided with two enhancing propellers (5 and), namely the smaller (5) and the bigger (6), the central part of the bigger propeller (6) equipped with bearings (7) and a support (8).

2. **"CONSTRUCTIVE ARRANGEMENT APPLIED IN AIR DIFFUSER FOR COMBUSTION ENGINES",** according to claim 1, **characterized by** the option not to contain the two propellers (5 and 6).
